# EUROPÄISCHE PATENTSCHRIFT

(11) **EP 2 689 654 B1**
(45) Veröffentlichungstag und Bekanntmachung des Hinweises auf die Patenterteilung: **22.06.2016**
(21) Anmeldenummer: 13176027.4
(22) Anmeldetag: 11.07.2013
(51) Int. Cl.: A01D 90/04, B65G 19/04, A01F 15/10

(54) **Fördervorrichtung und Ballenpresse mit einer solchen**
Conveyor device and baler with such
Dispositif de transport et presse à balles doté d'un tel dispositif

(30) Priorität: 23.07.2012 DE 102012212846
(43) Veröffentlichungstag der Anmeldung: 29.01.2014
(73) Patentinhaber: Deere & Company, Moline, IL 61265 (US)
(72) Erfinder: Biziorek, Stephane, 70100 Gray la Ville (FR)
(74) Vertreter: Reichert, Christian

(56) Entgegenhaltungen:
- EP-A2- 1 027 821
- DE-A1- 3 025 371
- DE-A1- 19 841 598

## Beschreibung

Die Erfindung betrifft eine Fördervorrichtung mit einem Förderrotor, einem Förderkanal und einem Förderkanalboden, wobei Förderrotor und Förderkanalboden veränderbar beabstandet zueinander angeordnet sind und den Förderkanal wenigstens teilweise begrenzen, wobei der Förderkanalboden durch wenigstens eine Stellvorrichtung radial zur Rotationsachse des Förderrotors im Abstand zum Förderrotor veränderbar ist.

Fördervorrichtungen, insbesondere für Erntegut, werden beispielsweise an Erntemaschinen, wie Ballenpressen, eingesetzt und sind bekannt. Bei Erntemaschinen wie Ballenpressen, insbesondere Rundballenpressen, wird landwirtschaftliches Pressgut bzw. Erntegut von einer Erntegutaufnahmeeinrichtung (Pick-up) in eine Fördervorrichtung geleitet, welche einen Förderrotor in Form einer Förderrolle umfasst, die zusammen mit einem Förderkanalboden einen Förderkanal formen, durch den das Erntegut in eine Pressenkammer befördert wird. Der Förderkanalboden kann verstellbar ausgebildet sein, derart, dass der Abstand zum Förderrotor verringert oder vergrößert werden kann. Damit kann der Förderkanalquerschnitt verändert werden, um Überlastsituationen, die durch Aufnahme von zu viel Erntegut am Förderrotor bzw. in der Fördervorrichtung entstehen können, zu vermeiden bzw. vorzubeugen. Die Überlast wird dabei oftmals am Förderrotor selbst, durch beispielsweise Drehmomentsensoren, oder auch durch Kraft- oder Drucksensoren am Förderkanalboden oder an Verstellkomponenten erfasst und zur Beeinflussung bzw. Steuerung des Förderkanalquerschnitts herangezogen.

Eine derartige Fördervorrichtung ist beispielsweise in DE 198 41 598 A1 offenbart, wobei der Förderkanalboden abgesenkt werden kann, um Überlastungen des Förderrotors und insbesondere Verstopfungen frühestmöglich zu vermeiden. Dazu werden Drehmomentsensoren, elektronisch ansteuerbare Mittel, sowie eine elektronische Steuereinheit verwendet, um den Förderkanalboden in Abhängigkeit von einem am Förderrotor wirkenden Antriebsmoment abzusenken. Ein maximales Antriebsmoment, bei welchem die Steuerung beginnt einzugreifen, um den Förderkanalboden abzusenken, kann dabei vom Bediener vorgegeben werden. Nachteilig wirkt sich aus, dass beim Absenken des Förderkanalbodens die gesamte Breite des Förderrotors davon betroffen ist, so dass das in die Pressenkammer geleitete Erntegut über die gesamte Breite von dem Eingriff betroffen ist. Ein über die Breite des Förderrotors partiell ausgerichtetes Reagieren auf sich anhäufendes Erntegut ist nicht möglich. Dies kann zu Dichte- bzw. Kompressionsunterschieden im Erntegutstrom führen. Ferner kann die Förderung des Ernteguts, über die gesamte Breite oder partiell unterbrochen werden, sollte der Förderkanalboden über ein bestimmtes Maß hinaus über die gesamte Breite abgesenkt werden. Dadurch würde der Pressvorgang des Ernteguts unterbrochen bzw. verzögert werden.

Die der Erfindung zugrunde liegende Aufgabe wird darin gesehen, eine Fördervorrichtung der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Fördervorrichtung der eingangs genannten Art derart ausgebildet, dass der Förderkanalboden in Rotationsachsenrichtung in wenigstens zwei Bodensegmente unterteilt ist, welche getrennt voneinander jeweils durch eine Stellvorrichtung im Abstand zum Förderrotor veränderbar sind. Durch eine Unterteilung des Förderkanalbodens in mehrere Bodensegmente kann der Förderkanal partiell geöffnet werden, ohne den Erntegutstrom über die gesamte Breite des Förderrotors zu beeinflussen. So können Unterbrechungen im Erntegutstrom vermieden werden. Ferner werden Dichte- bzw. Kompressionsunterschiede im Erntegutstrom minimiert, sowohl in Erntegutstromrichtung als auch in Querrichtung dazu. Die Unterteilung des Förderkanalbodens kann in zwei oder auch in drei oder mehr Bodensegmenten erfolgen, wobei mit zunehmender Bodensegmentanzahl die Präzision einer Beeinflussung eines Erntegutstroms bzw. eines Pressgutstroms erhöht und damit die Qualität des Pressvorgangs, insbesondere in einer Ballenpresse, optimiert wird. Der Förderkanalboden bzw. die Bodensegmente sind beweglich gelagert, so dass eine Abstandsänderung zum Förderrotor in radialer Richtung zum Selbigen veränderbar ist. Eine bewegliche Lagerung kann beispielsweise über eine Gelenk- oder Schwenkanordnung erfolgen, wobei eine Betätigung durch beliebige Stellvorrichtungen bzw. Aktuatoren motorisch erfolgen kann. Diesbezüglich sind Betätigungsvorrichtungen mit elektrischen, hydraulischen oder auch pneumatischen Aktuatoren oder Stellelementen denkbar.

Die Fördervorrichtung kann Sensoren umfassen, mit denen eine auf die Bodensegmente oder auf den Förderrotor wirkende Last erfassbar ist. Die Sensoren können dabei derart ausgebildet und ausgelegt sein, dass eine auf den Förderrotor oder auf ein oder mehrere der Bodensegmente wirkende Last in Form eines Drehmoments, einer Kraft oder eines Drucks erfasst und verarbeitet wird.

Die Fördervorrichtung kann Sensoren umfassen, mit denen zum Einen eine auf den Förderrotor wirkende Last und zum Anderen der Abstand eines oder mehrerer Bodensegmente zum Förderrotor erfassbar ist. Die Sensoren können dabei derart ausgebildet und ausgelegt sein, dass eine auf den Förderrotor wirkende Last in Form eines Drehmoments, einer Kraft oder eines Drucks erfasst und verarbeitet wird.

Eine elektronische Steuereinheit verarbeitet das durch die Sensoren gelieferte Lastsignal, wertet dieses aus und generiert ein entsprechendes Steuersignal in Abhängigkeit von dem Lastsignal. Durch das Steuersignal können die Aktuatoren oder Stellelemente entsprechend angesteuert und die Bodensegmente verstellt werden, wobei mit zunehmendem Lastsignal oder bei Überschreiten eines vorgebbaren Lastsignalschwellwertes das entsprechende Bodensegment geöffnet bzw. von dem Förderrotor entfernt wird. Im umgekehrten Fall wird das Bodensegment entsprechend entgegen gesetzt bewegt und geschlossen bzw. entsprechend an den Förderrotor heran bewegt.

Für jedes Bodensegment kann ein separater Sensor vorgesehen. So kann der Sensor direkt am Bodensegment platziert werden und ermöglicht eine direkte Zuordnung über sich ändernde Lastzustände. Auch die Kombination eines Lastsensors am Förderrotor (z.B. ein Drehmomentsensor) mit weiteren Sensoren an den Bodensegmenten (z.B. Abstandssensoren) ist möglich und praktikabel.

Ferner kann für jedes Bodensegment eine separate elektronische Steuereinheit vorgesehen sein. Die Komplexität einer elektronischen Steuerung kann dadurch gering gehalten werden.

Die Aktuatoren können als Hydraulikzylinder ausgebildet sein, die über elektromagnetische Steuerventile ansteuerbar sind. Es ist jedoch auch denkbar, elektromotorische Stellmittel, beispielsweise Schrittmotoren vorzusehen, die direkt über die elektrischen Steuereinheiten angesteuert werden. Ferner können die Aktuatoren auch als pneumatische Stellglieder ausgebildet sein und über entsprechende elektromagnetische Steuerventile angesteuert werden.

Die Sensoren können als Drucksensoren oder Drehmomentsensoren ausgebildet sein, so dass ein auf die Bodensegmente wirkender Druck bzw. eine auf die Bodensegmente wirkende Last erfasst wird. Beispielsweise kann ein Drucksensor den Druck in einem mit dem Bodensegment zur Verstellung des Selben verbundenen Hydraulikzylinder erfassen, welcher unmittelbar auf die an dem Bodensegment lastende Kraft bzw. auf den am Bodensegment herrschenden Lastzustand schließen lässt. Ferner ist auch eine Drehmomenterfassung durch einen entsprechenden Sensor an beispielsweise einem Schwenkgelenk eines Bodensegments möglich. Durch Erfassung des Drehmoments am Schwenkgelenk kann gleichermaßen eine auf das Bodensegment wirkende Last erfasst werden.

Eine weitere Möglichkeit ergibt sich auch durch Erfassen einer auf den Förderrotor wirkenden Last, beispielsweise durch eine Drehmomentmessung am Förderrotor in Kombination mit Abstandssensoren an den Bodensegmenten oder den Stellgliedern. Bei Überschreiten einer voreinstellbaren Grenzlast für den Förderrotor wird durch die Abstandssensoren das/die sich am nahesten befindliche/n Bodensegment/e erfasst und entsprechend vom Förderrotor entfernt, bis sich ein voreingestelltes Lastniveau am Förderrotor wieder eingestellt hat. Bei Unterschreiten der genannten Grenzlast können die Bodensegmente wieder dem Förderrotor angenähert werden.

Die Anzahl der Bodensegmente kann selbstverständlich erhöht werden, so dass auch drei oder mehr Bodensegmente angeordnet werden können. Je mehr Bodensegmente vorgesehen werden, umso präziser und gezielter können sich einstellende Lastzustände am Förderrotor bzw. an den Bodensegmenten detektiert und entsprechend darauf reagiert werden.

Eine Fördervorrichtung gemäß der oben beschriebenen Art kann beispielsweise in einer Ballenpresse zum Fördern und Pressen von landwirtschaftlichem Pressgut eingesetzt werden. Dadurch kann eine möglichst gleichmäßige Dichte und damit Form eines zu pressenden Ballens ermöglicht werden ohne dass beispielsweise auch der Pressvorgang bei zu hohen Lastspitzen unterbrochen werden muss. Ferner kann eine derartige Fördervorrichtung auch an beispielsweise Feldhäckslern oder anderen Gerätschaften bzw. landwirtschaftlichen Maschinen, die mit einer Erntegutaufnahmeeinrichtung versehen sind, vorgesehen werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Ballenpresse mit einer erfindungsgemäßen Fördervorrichtung in Seitenansicht und schematischer Darstellung, mit einem Förderkanalboden in einer einem Förderrotor zugelegenen Stellung und mit einem Hydraulikzylinder für eine Stellvorrichtung,
- Fig. 2: die Fördervorrichtung aus Figur 1 mit einem Förderkanalboden in einer dem Förderrotor teils weggeschwenkten Stellung,
- Fig. 3: die Fördervorrichtung aus Figur 1 mit einem Förderkanalboden in einer vollkommen von dem Förderrotor weggeschwenkten Stellung und
- Fig. 4: eine schematische Darstellung eines Hydraulikkreislaufs für eine elektrohydraulisch ansteuerbare Stellvorrichtung mit Hydraulikzylindern aus Figur 1.

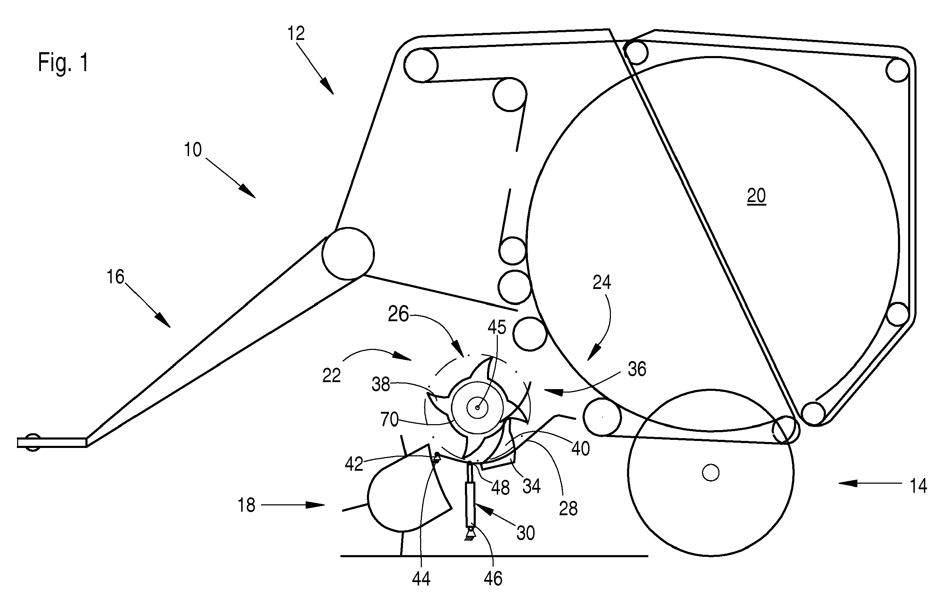

Eine in Figur 1 gezeigte Ballenpresse 10 ist von üblicher Bauart, d.h. sie weist einen Aufbau 12, ein Fahrgestell 14, eine Deichsel 16, eine Erntegutaufnahmeeinrichtung 18, einen Pressraum 20 und eine Fördervorrichtung 22 auf.

Die Ballenpresse 10 ist als eine gezogene Ballenpresse 10 mit einem größenveränderlichen Pressraum 20 dargestellt; es könnte sich genauso um eine selbstfahrende Ballenpresse 10 und/oder um eine mit einem in der Größe konstanten Pressraum 20 handeln, wobei die Art nicht näher bezeichneter Presselemente ohne Belang ist.

Der Aufbau 12 stützt sich auf dem Fahrgestell 14 ab und trägt die Erntegutaufnahmeeinrichtung 18 und die Fördervorrichtung 22 und bildet den Pressraum 20 zwischen nicht näher bezeichneten Seitenwänden.

Das Fahrgestell 14 enthält eine starr oder federnd angebrachte Achse und Räder.

Die Deichsel 16 ist starr oder vertikal schwenkbar an den Aufbau 12 angeschlossen und dient der Verbindung mit einem nicht gezeigten Zugfahrzeug, beispielsweise einem Traktor.

Die Erntegutaufnahmeeinrichtung 18 wird auch als Pick-up bezeichnet und ist höhenbeweglich an den Aufbau 12 angeschlossen, wie dies ebenfalls bekannt ist.

Der Pressraum 20 weist an einem vorderen unteren Bereich einen Einlass 24 für das Erntegut auf, der sich direkt an die Fördervorrichtung 22 anschließt.

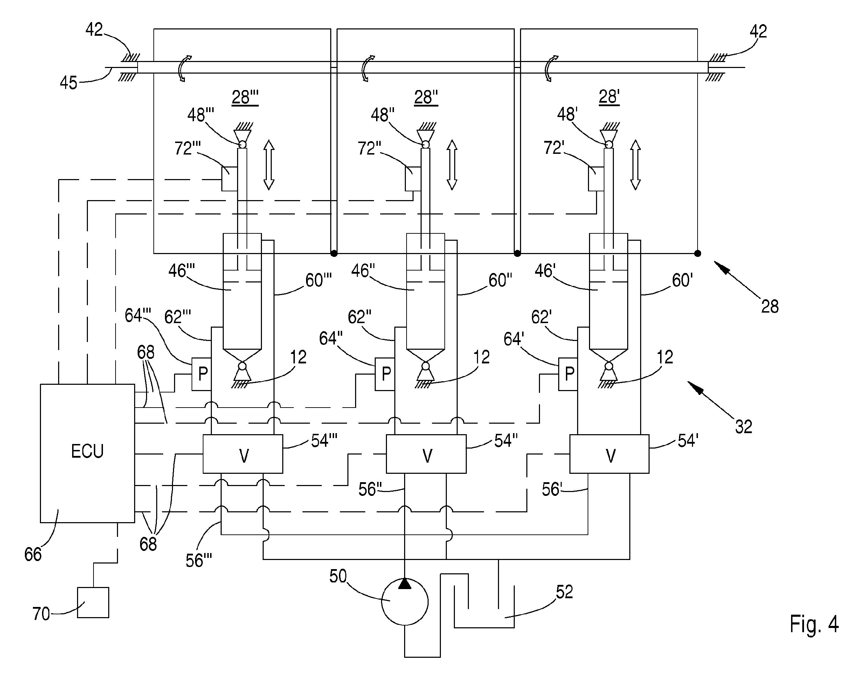

Die Fördervorrichtung 22 kann mit der Erntegutaufnahmeeinrichtung 18 oder dem Aufbau 12 starr oder beweglich verbunden sein und enthält unter anderem einen Förderrotor 26, einen Förderkanalboden 28, Stellvorrichtungen 30 und in diesem Ausführungsbeispiel eine hydraulische Anordnung 32 für die Stellvorrichtungen 30 (siehe Figur 4) und eine Schneidvorrichtung 34. Die Fördervorrichtung 22 hat die Aufgabe, von der Erntegutaufnahmeeinrichtung 18 herangeführtes Erntegut anzunehmen und es geschnitten oder ungeschnitten in den Pressraum 20 zu befördern. Je nach der Beschaffenheit des Ernteguts an sich oder der Dichte des Erntegutstroms besteht dabei stets die Gefahr von Verstopfungen, in deren Vorfeld es zu einem erhöhten Druck auf den Förderkanalboden 28 kommt. Der Bereich zwischen der Erntegutaufnahmeeinrichtung 18, dem Einlass 24, dem Förderkanalboden 28, dem Förderrotor 26 und nicht gezeigten Seitenwänden stellt einen Förderkanal 36 dar.

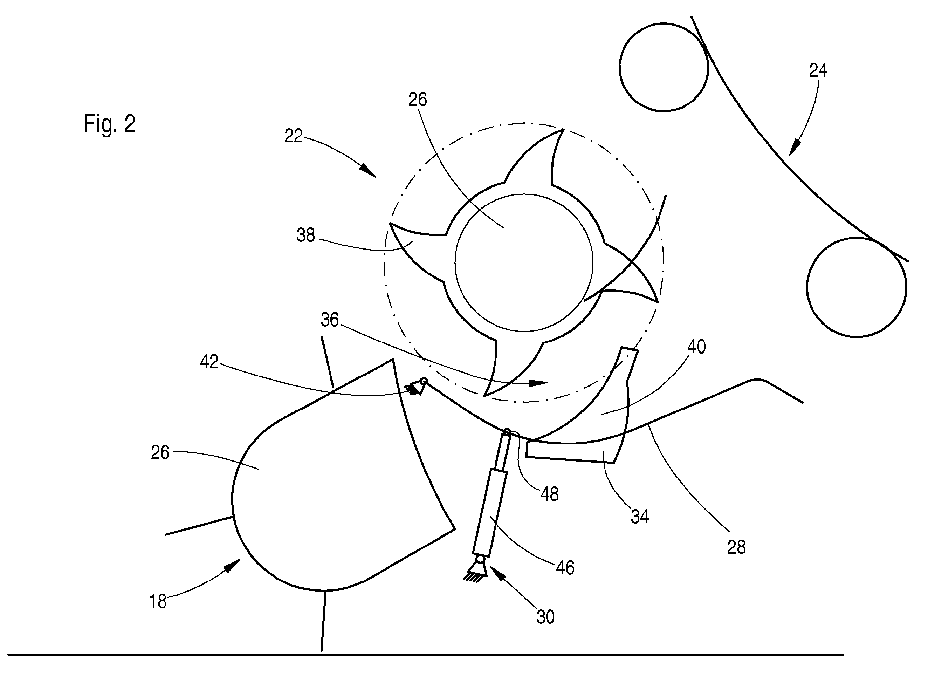

Der Förderrotor 26 kann in beiden Richtungen angetrieben werden und weist Mitnehmer 38 auf, die das Erntegut fördern und auf Messer 40 der Schneidvorrichtung 34 pressen, wenn solche vorhanden sind. Die Mitnehmer 38 reichen bei der Stellung des Förderkanalbodens 24 gemäß den Figuren 1 und 2 bis nahe an diese heran.

Der Förderkanalboden 28 erstreckt sich zwischen der Erntegutaufnahmeeinrichtung 18 und dem Einlass 24 und folgt im Wesentlichen dem Umfang des Förderrotors 26 auf ca. einem Viertel dessen Umfangskreises. Während die Zeichnung eine unterschlächtige Fördervorrichtung 22 zeigt, könnte die Erfindung ebenso an einer oberschlächtigen Fördervorrichtung 22 verwendet werden. Der Förderkanalboden 28 ist in Querrichtung zur Ballenpresse 10 bzw. in Längsrichtung zum Förderrotor 26 (in Rotationsachsenrichtung des Förderrotors 26) in drei Bodensegmente 28', 28", 28'" unterteilt, wobei an den Bodensegmenten 28', 28", 28'" jeweils an der dem Förderrotor 26 abgelegenen Seite des Förderkanalbodens 28 an dem der Erntegutaufnahmeeinrichtung 18 zugewandten Endbereich, ein Schwenklager 42 angeordnet ist (siehe Figur 4). In diesem speziellen Ausführungsbeispiel befindet sich das Schwenklager 42 an einem Träger 44. Das Schwenklager 42 dient dabei als schwenkbare Aufhängung der jeweiligen Bodensegmente 28', 28", 28"' des Förderkanalbodens 28 wobei jedes Bodensegment 28', 28", 28'" um eine am Schwenklager 42 angeordnete Schwenkachse 45 verschwenkbar gelagert ist (siehe Figur 4). Ferner sind stromabwärts des Schwenklagers 42 die Stellvorrichtungen 30 in Form von Hydraulikzylindern 46', 46", 46'" angeordnet, wobei jeder an einem stromabwärts des Schwenklagers 42 angeordneten Gelenkpunkt 48', 48", 48'" mit dem jeweiligen Bodensegment 28', 28", 28'" des Förderkanalbodens 28 verbunden ist. Durch Verstellen der Stellvorrichtungen 30 kann der Förderkanalboden 28 bzw. können die Bodensegmente 28', 28", 28'" des Förderkanalbodens 28 an dem Schwenklager 42 verschwenkt bzw. um die Schwenkachse 45 verdreht und der Förderkanalboden 28 damit im Wesentlichen radial zum Förderrotor 26 im Abstand verändert werden.

Der Förderkanalboden 28 bzw. die Bodensegmente 28', 28", 28'" können mit nicht gezeigten Schlitzen versehen sein, durch die sich die Messer 40 erstrecken können.

Die Stellvorrichtungen 30 sind in diesem Ausführungsbeispiel mit doppeltwirkenden Hydraulikzylindern 46', 46", 46'" ausgebildet, deren kolbenstangenseitige Enden an den jeweiligen Gelenkpunkten 48', 48", 48'" angreifen, während die kolbenbodenseitigen Enden am Aufbau 12 angeschlossen sind. Die Stellvorrichtungen 30 erstrecken sich im Wesentlichen senkrecht und sind an der hydraulischen Anordnung 32 angeschlossen. Der Hydraulikkreis 32 ist nur der Einfachheit wegen nur in Figur 4 gezeigt, ansonsten aber bei diesem Ausführungsbeispiel stets enthalten.

Die hydraulische Anordnung 32 ist gemäß Figur 4 ausgebildet. Sie umfasst neben den genannten Hydraulikzylindern 46', 46", 46"', eine Hydraulikpumpe 50, einen Hydrauliktank 52, Steuerventile 54', 54", 54'". Ferner sind die Steuerventile 54', 54", 54'" über erste hydraulische Versorgungsleitungen 56', 56", 56'" mit der Hydraulikpumpe 50 und über zweite hydraulische Versorgungsleitungen 58', 58", 58'" mit dem Hydrauliktank 52 verbunden. Des Weiteren sind die Hydraulikzylinder 46', 46", 46'" jeweils über eine kolbenstangenseitige Hydraulikleitung 60', 60", 60'" und über eine kolbenbodenseitige Hydraulikleitung 62', 62", 62'" mit den Steuerventilen 54', 54", 54'" verbunden. Als Steuerventile 54', 54", 54'" können elektromagnetisch ansteuerbare Wegeventile (beispielsweise 2/2-Wegeventile) eingesetzt werden, wobei die Verwendung von Wegeventilen mit Zwischenstellungen bzw. Proportionalventilen vorteilhaft (aber nicht zwingend) ist. An den kolbenbodenseitigen Hydraulikleitungen 62', 62", 62'" sind jeweils Drucksensoren 64', 64", 64'" angeordnet, die einen in der Kolbenbodenkammer des jeweiligen Hydraulikzylinders 46', 46", 46'" vorherrschenden Druck signalisieren. Des Weiteren umfasst die hydraulische Anordnung 32 eine elektronische Steuereinheit 66 die zur Ansteuerung der Steuerventile 54', 54", 54'" bzw. zum Erfassen von Sensorsignalen und entsprechenden Generieren von Steuersignalen dient. Die elektronische Steuereinheit 66 ist sowohl mit den Steuerventilen 54', 54", 54'" als auch mit den Drucksensoren 64', 64", 64'" über elektrische Steuerleitungen 68 verbunden. Ferner verfügt die elektronische Steuereinheit 66 über einen Datenspeicher in dem entsprechende Steuerdaten in Form von Schwellwerten bzw. Grenzwerten und Steueralgorithmen abgelegt sind, so dass ein geschlossener Regelkreis realisierbar ist der eine Regelung bzw. Steuerung der Lastzustände am Förderrotor 26 bzw. an den Bodensegmenten 28', 28", 28'" ermöglicht.

Nach alledem ergibt sich folgende Funktion ausgehend von einem normalen Betriebszustand, wie er in Figur 1 gezeigt ist.

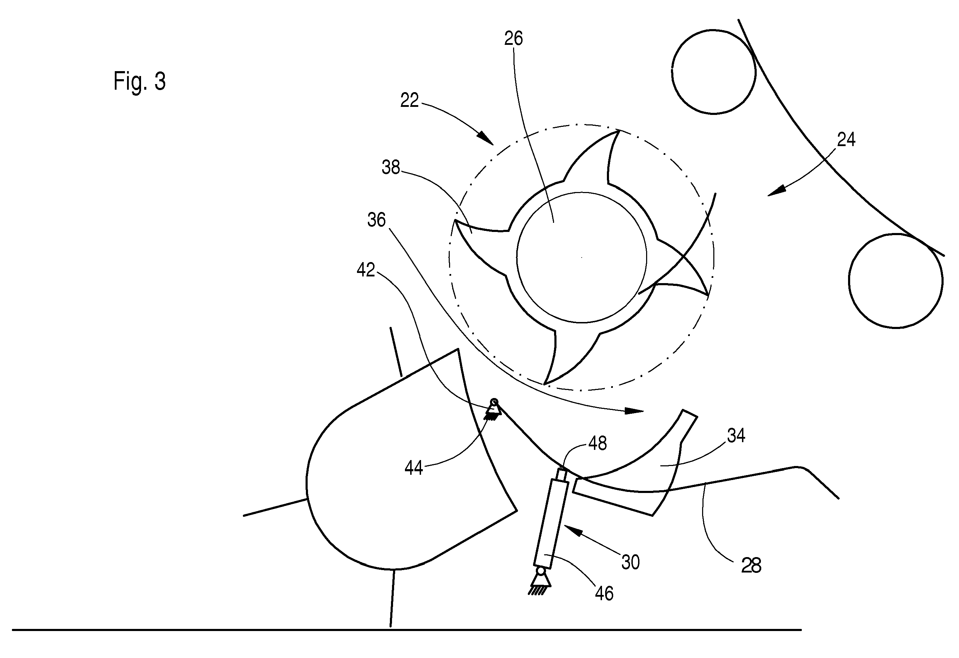

Gemäß Figur 1 befindet sich der Förderkanalboden 28 in einer dem Förderrotor 26 zugelegenen Stellung. In einem Fall, in dem so viel Erntegut in den Förderkanal 36 gelangt und von dem Förderrotor 26 gegen den Förderkanalboden 28 gepresst wird, dass der Lastzustand am Förderrotor bzw. am Förderkanalboden eine zulässige Grenzlast überschreitet wird drückt sich dies durch einen entsprechenden Druckanstieg in einem oder mehreren der Hydraulikzylinder 46', 46", 46'" aus. Der Druck in den Hydraulikzylindern 46', 46", 46'" wird durch entsprechende Drucksignale der Drucksensoren 62', 62", 62'" signalisiert. Sollte der Druck einen vorgegebenen, in der elektronischen Steuereinheit hinterlegten, Grenzdruck überschreiten, so wird ein Steuersignal generiert, welches eine entsprechende Ansteuerung der Steuerventile 54', 54", 54'" und ein Nachstellen der Hydraulikzylinder 46', 46", 46'" veranlasst, bis der genannte Grenzdruck wieder erreicht bzw. unterschritten wird. Das betroffene Bodensegment 28', 28", 28'" (unter Umständen auch alle Bodensegmente 28', 28", 28"") wird entsprechend vom Förderrotor 26 wegbewegt und in eine weggeschwenkte bzw. teilweise weggeschwenkte Stellung gemäß den Figuren 2 oder 3 bewegt. Je nach Erntegutfluss kann sich eine Überschreitung der Grenzlast am Förderrotor 26 durch partielle Anhäufung entlang seiner Rotationsachse 45 ergeben, wobei dann durch entsprechende Ansteuerung des nur von der Anhäufung betroffenen Bodensegments 28', 28", 28'" eine Nachstellung partiell erfolgen kann, so dass der nicht betroffene Bereich im Erntegutfluss unbeeinflusst bleibt und dennoch die Last am Förderrotor 26 verringert wird. Durch die Ansteuerung einzelner Bodensegmente 28', 28", 28'" als Reaktion auf eine Lastüberschreitung am Förderrotor 26 werden Dichte- bzw. Kompressionsunterschieden im Erntegutfluss minimiert. Auch wird einer Unterbrechung und Verzögerung des Erntegutflusses vorgebeugt und letztendlich die Pressqualität und Pressleistung der Ballenpresse verbessert. Eine entsprechende Erhöhung der Anzahl an Bodensegmenten 28', 28", 28'" (beispielsweise auf 4, 5 Bodensegmente oder mehr) ist ebenfalls denkbar, wodurch dieser Effekt noch verstärkt werden kann.

In einem weiteren Ausführungsbeispiel kann an Stelle der Drucksensoren 64', 64", 64'" an den Hydraulikleitungen 62', 62", 62'" auch beispielsweise ein Drehmomentsensor 70 (oder ein anderer geeigneter Lastsensor) an dem Förderrotor 26 in Kombination mit Abstandssensoren 72', 72", 72'" vorgesehen sein. Die Abstandssensoren 72', 72", 72'" können an den Bodensegmenten 28', 28", 28'" angeordnet sein oder an anderen Komponenten, die mit diesen in Verbindung stehen und ein entsprechendes Abstandssignal liefern können, beispielsweise an den Stellvorrichtungen 30. In diesem Ausführungsbeispiel kann ein Lastsignal über den Drehmomentsensor 70 die Last am Förderrotor erfassen und signalisieren. Die Steuereinheit 66 erfasst gleichzeitig die Abstände der einzelnen Bodensegmente 28', 28", 28'". Bei Überschreiten der zulässigen Grenzlast wird das dem Förderrotor am nahesten gelegene Bodensegment 28', 28", 28'" entsprechend angesteuert und von dem Förderrotor 26 entfernt, bis die Grenzlast wieder unterschritten wird. Gegebenenfalls werden mehrere oder alle der Bodensegmente 28', 28", 28'" nachgestellt bzw. angesteuert.

Für beide Ausführungsbeispiele gilt, dass bei Unterschreiten einer Minimallast, Mindestlast oder Richtlast am Förderrotor 26 (die genannten Lastgrößen sind entsprechend in der elektronischen Steuereinheit hinterlegt) die Bodensegmente 28', 28", 28'" ebenfalls entsprechend nachgestellt bzw. angesteuert werden und zum Förderrotor 26 hinbewegt werden. Auf diese Weise kann durch Regelung der am Förderrotor 26 wirkenden bzw. anliegenden Last eine Leistungsoptimierung der Ballenpresse 10 erzielt werden, so dass eine maximale Auslastung der Ballenpresse 10 erzielt wird und die Last am Förderrotor stets zwischen einer Minimalast und einer Grenzlast
gehalten bzw. geregelt wird.

Auch wenn die Erfindung lediglich anhand der oben beschriebenen Ausführungsbeispiele dargestellt wurde, erschließen sich für den Fachmann im Lichte der vorstehenden Beschreibung sowie der Zeichnung viele verschiedenartige Alternativen, Modifikationen und Varianten, sofern diese unter die vorliegenden Ansprüche fallen.

## Patentansprüche

1. Fördervorrichtung (22) für Erntegut mit einem Förderrotor (26), einem Förderkanal (36) und einem Förderkanalboden (28), wobei Förderrotor (26) und Förderkanalboden (28) veränderbar beabstandet zueinander angeordnet sind und den Förderkanal (26) wenigstens teilweise begrenzen, wobei der Förderkanalboden (28) durch wenigstens eine Stellvorrichtung (30) radial zur Rotationsachse (45) des Förderrotors (26) im Abstand zum Förderrotor (26) veränderbar ist, **dadurch gekennzeichnet, dass** der Förderkanalboden (28) in Rotationsachsenrichtung in wenigstens zwei Bodensegmente (28', 28", 28"') unterteilt ist, welche getrennt voneinander jeweils durch eine Stellvorrichtung (30) im Abstand zum Förderrotor (26) veränderbar sind.

2. Fördervorrichtung (22) nach Anspruch 1, **dadurch gekennzeichnet, dass** die Fördervorrichtung (22) Sensoren (64', 64", 64"") umfasst, mit denen eine auf die Bodensegmente (28', 28", 28"") oder auf den Förderrotor (26) wirkende Last erfassbar ist.

3. Fördervorrichtung (22) nach Anspruch 1, **dadurch gekennzeichnet, dass** die Fördervorrichtung (22) Sensoren (70, 72', 72", 72"") umfasst, mit denen eine auf den Förderrotor (26) wirkende Last und ein zum Förderrotor (26) vorhandener Abstand zu den Bodensegmenten (28', 28", 28"") erfassbar ist.

4. Fördervorrichtung (22) nach Anspruch 2 oder 3, **dadurch gekennzeichnet, dass** wenigstens eine elektronische Steuereinheit (66) enthalten ist, mit welcher ein von einem oder mehreren der Sensoren (64', 64", 64"', 70) geliefertes Lastsignal verarbeitbar und eine oder mehrere der Stellvorrichtungen (30) in Abhängigkeit von dem Lastsignal ansteuerbar sind.

5. Fördervorrichtung (22) nach einem der Ansprüche 2 bis 4, **dadurch gekennzeichnet, dass** für jedes Bodensegment (28', 28", 28"') ein Sensor (64', 64", 64"", 72', 72", 72"") vorgesehen ist.

6. Fördervorrichtung (22) nach einem der Ansprüche 4 oder 5, **dadurch gekennzeichnet, dass** für jedes Bodensegment (28', 28", 28"") eine elektronische Steuereinheit (66) vorgesehen ist.

7. Fördervorrichtung (22) nach einem der Ansprüche 1 bis 6, **dadurch gekennzeichnet, dass** die Stellvorrichtungen (30) Aktuatoren umfassen, die als Hydraulikzylinder (46', 46", 46"") ausgebildet und über elektromagnetische Steuerventile (54', 54", 54"") ansteuerbar sind.

8. Fördervorrichtung (22) nach einem der Ansprüche 2 bis 7, **dadurch gekennzeichnet, dass** die Sensoren (64', 64", 64"', 70) als Drucksensoren oder Drehmomentsensoren ausgebildet sind.

9. Fördervorrichtung (22) nach einem der Ansprüche 3 bis 7, **dadurch gekennzeichnet, dass** die Sensoren (70, 72', 72", 72"") als Drehmomentsensoren und Abstandssensoren ausgebildet sind.

10. Fördervorrichtung (22) nach einem der Ansprüche 1 bis 9, **dadurch gekennzeichnet, dass** der Förderkanalboden (28) in wenigstens drei Bodensegmente (28', 28", 28"") unterteilt ist.

11. Ballenpresse (10) zum Pressen von landwirtschaftlichem Pressgut mit einer Fördervorrichtung (22) nach einem oder mehreren der vorhergehenden Ansprüche.

## Claims

1. Conveyor device (22) for crop, with a conveyor rotor (26), a conveyor channel (36) and a conveyor channel floor (28), wherein conveyor rotor (26) and conveyor channel floor (28) are arranged spaced apart from each other in a changeable manner and at least partially delimit the conveyor channel (26), wherein the conveyor channel floor (28) can be changed in distance from the conveyor rotor (26) radially with respect to the axis of rotation (45) of the conveyor rotor (26) by means of at least one adjustment device (30), **characterized in that** the conveyor channel floor (28) is divided in the direction of the axis of rotation into at least two floor segments (28', 28", 28"') which can be changed in distance from the conveyor rotor (26) separately from one another in each case by means of an adjustment device (30).

2. Conveyor device (22) according to Claim 1, **characterized in that** the conveyor device (22) comprises sensors (64', 64", 64"') with which a load acting on the floor segments (28', 28", 28'") or on the conveyor rotor (26) can be detected.

3. Conveyor device (22) according to Claim 1, **characterized in that** the conveyor device (22) comprises sensors (70, 72', 72", 72"') with which a load acting on the conveyor rotor (26) and a distance present from the floor segments (28', 28", 28"') with respect to the conveyor rotor (26) can be detected.

4. Conveyor device (22) according to Claim 2 or 3, **characterized in that** at least one electronic control unit (66) is included, with which a load signal supplied by one or more of the sensors (64', 64", 64"', 70) can be processed and one or more of the adjustment devices (30) can be activated depending on the load signal.

5. Conveyor device (22) according to one of Claims 2 to 4, **characterized in that** a sensor (64', 64", 64'", 72', 72", 72'") is provided for each floor segment (28', 28", 28'").

6. Conveyor device (22) according to either of Claims 4 and 5, **characterized in that** an electronic control unit (66) is provided for each floor segment (28', 28", 28'").

7. Conveyor device (22) according to one of Claims 1 to 6, **characterized in that** the adjustment devices (30) comprise actuators which are designed as hydraulic cylinders (46', 46", 46"') and are activateable via electromagnetic control valves (54', 54", 54"').

8. Conveyor device (22) according to one of Claims 2 to 7, **characterized in that** the sensors (64', 64" 64"', 70) are designed as pressure sensors or torque sensors.

9. Conveyor device (22) according to one of Claims 3 to 7, **characterized in that** the sensors (70, 72', 72", 72"') are designed as torque sensors and distance sensors.

10. Conveyor device (22) according to one of Claims 1 to 9, **characterized in that** the conveyor channel floor (28) is divided into at least three floor segments (28', 28", 28').

11. Baler (10) for baling agricultural material to be baled with a conveyor device (22) according to one or more of the preceding claims.

## Revendications

1. Dispositif de transport (22) de produits agricoles, comportant un rotor transporteur (26), un canal transporteur (36) et un fond de canal transporteur (28), dans lequel le rotor transporteur (26) et le fond de canal transporteur (28) sont disposés de manière espacée l'un de l'autre et délimitent le canal transporteur (26) au moins partiellement, dans lequel la distance du fond de canal transporteur (28) au rotor transporteur (26) peut être modifiée radialement par rapport à l'axe de rotation (45) du rotor transporteur (26) par au moins un dispositif de réglage (30), **caractérisé en ce que** le fond de canal transporteur (28) est divisé, dans la direction de l'axe de rotation, en au moins deux segments de fond (28', 28", 28'"), dont la distance par rapport au rotor transporteur (26) peut respectivement être modifiée de manière séparée l'un de l'autre par un dispositif de réglage (30).

2. Dispositif de transport (22) selon la revendication 1, **caractérisé en ce que** le dispositif de transport (22) comprend des capteurs (64', 64", 64"') au moyen desquels une charge agissant sur les segments de fond (28', 28", 28"') ou sur le rotor transporteur (26) peut être détectée.

3. Dispositif de transport (22) selon la revendication 1, **caractérisé en ce que** le dispositif de transport (22) comprend des capteurs (70, 72', 72", 72"') au moyen desquels une charge agissant sur le rotor transporteur (26) et une distance courante du rotor transporteur (26) par rapport aux segments de fond (28', 28", 28"') peuvent être détectées.

4. Dispositif de transport (22) selon la revendication 2 ou 3, **caractérisé en ce qu'**il est prévu au moins une unité de commande électronique (66) au moyen de laquelle un signal de charge délivré par un ou plusieurs des capteurs (64', 64'', 64''', 70) peut être traité et un ou plusieurs des dispositifs de réglage (30) peut être commandé en fonction du signal de charge.

5. Dispositif de transport (22) selon l'une quelconque des revendications 2 à 4, **caractérisé en ce que** pour chaque segment de fond (28', 28", 28'''), il est prévu un capteur (64', 64", 64"', 72', 72", 72"').

6. Dispositif de transport (22) selon l'une quelconque des revendications 4 ou 5, **caractérisé en ce que**, pour chaque segment de fond (28', 28", 28"'), il est prévu une unité de commande électronique (66).

7. Dispositif de transport (22) selon l'une quelconque des revendications 1 à 6, **caractérisé en ce que** les dispositifs de réglage (30) comprennent des actionneurs qui sont réalisés sous la forme de vérins hydrauliques (46', 46", 46"') et qui peuvent être commandés par l'intermédiaire d'électrovannes de commande (54', 54", 54"').

8. Dispositif de transport (22) selon l'une quelconque des revendications 2 à 7, **caractérisé en ce que** les capteurs (64', 64", 64"', 70) sont réalisés sous la forme de capteurs de pression ou de capteurs de couple de rotation.

9. Dispositif de transport (22) selon l'une quelconque des revendications 3 à 7, **caractérisé en ce que** les capteurs (70, 72', 72", 72"') sont réalisés sous la forme de capteurs de couple de rotation et de capteurs de distance.

10. Dispositif de transport (22) selon l'une quelconque des revendications 1 à 9, **caractérisé en ce que** le fond de canal de transport (28) est divisé en au moins trois segments de fond (28', 28", 28"').

11. Presse à balles (10) destinée à comprimer des produits de compression agricoles comportant un dispositif de transport (22) selon l'une ou plusieurs des revendications précédentes.
